# EUROPEAN PATENT SPECIFICATION

(11) **EP 0 567 244 B1**
(45) Date of publication and mention of the grant of the patent: **31.01.1996**
(21) Application number: 93302674.2
(22) Date of filing: 06.04.1993
(51) Int. Cl.: B60R 1/12, H01Q 1/32

(54) **Antenna for vehicle radio**
Auto-Antenne
Antenne pour radio de véhicule

(30) Priority: 23.04.1992 GB 9208848
(43) Date of publication of application: 27.10.1993
(73) Proprietor: BRITAX (GECO) S.A., F-77981 St. Fargeau-Ponthierry Cédex (FR)
(72) Inventor: Mikolajczak, Felix, F-77950 Rubelles (FR)
(74) Representative: Hollinghurst, Antony

(56) References cited:
- FR-A- 2 543 744
- US-A- 3 522 584
- US-A- 3 967 275

## Description

This invention relates to an antenna for a vehicle radio of the type in which an antenna assembly is arranged to be mounted on the vehicle body in association with an exterior rear view mirror having a mirror base arranged to be secured to a vehicle body.

FR-A-2543744 discloses an antenna of this type which is mounted on a base plate of the same shape as the surface of the vehicle mirror which abuts against the vehicle body. In use, the base plate is mounted between the vehicle mirror and the vehicle body with the fixings for securing the vehicle mirror to the vehicle body passing through holes in the base plate. The present invention aims to avoid the need for the provision of such a base plate.

According to the invention, in an antenna of the type described above, the antenna assembly comprises a rod adapted to be connected to a base insert by a releasable coupling, the base insert being fitted into a bore in the mirror base and having a pointed end arranged to pierce an electrical connection strip accommodated within the mirror base.

In one form of the invention, the mirror is arranged to be mounted on the vehicle body by means of an electrically conductive stud which projects through a hole in the vehicle body, the stud being electrically connected to the connection strip and insulated from the vehicle body.

Preferably the insert has a self-tapping screw thread formed on its periphery for engagement in the bore in the mirror base part. Alternatively, the insert may have barbed formations on its periphery enabling it to be forced-fitted within the bore, the barbed formations resisting subsequent removal.

An embodiment of the invention will now be described by way of example, with reference to the accompanying drawings, in which:
Figure 1 is a perspective view of a vehicle rear view mirror assembly having an antenna assembly in accordance with the invention;
Figure 2 is an exploded perspective view of the base of the exterior mirror and part of the antenna assembly shown in Figure 1;
Figure 3 is an elevational view showing the face of the mirror assembly which abuts against the vehicle body; and
Figure 4 is a partly broken away elevational view, from the rear of the vehicle, of the base and the adjacent part of the vehicle; and
Figure 5 is a perspective view of an alternative insert for securing an antenna to a mirror assembly.

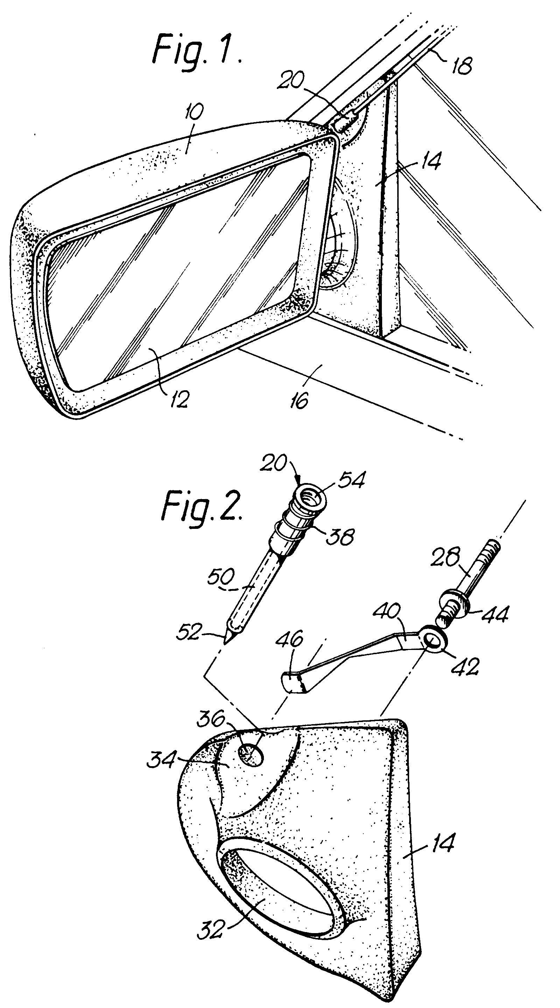

Referring to Figure 1, an exterior rear view mirror assembly comprises a housing 10 containing a mirror glass 12 secured to a base member 14 which is mounted on a vehicle door 16. A radio antenna in accordance with the invention comprises a rod 18 projecting from a base insert 20 received in the mirror base member 14.

Referring to Figures 2 to 4, the mirror base 14 having three integral pillars 22, 23 and 24 facing the vehicle door 16. A respective stud 26, 27 and 28 is fixed to each of the pillars 22, 23 and 24 by a self tapping screw formation (not shown) and projecting through holes in the vehicle door 16 so as to serve as securing means for attaching the mirror base 14 to the vehicle. The hole 30 for the third stud 28 (in a flange 31 forming part of the door 16) is of substantially larger diameter than the stud 28 so that the latter is electrically isolated from the vehicle body.

The base 14 includes a dome-like portion 32 for accommodating a pivotal mounting (not shown) for attachment of the mirror housing 10, and a protruding part 34 containing a bore 36 in which the insert 20 is received. The insert 20 has a self-tapping screw formation 38 for engagement with the wall of the bore 36.

A copper strip 40 is located within the mirror base 14 and has a washer-like formation 42 at one end which engages under a flange 44 on the stud 28. The other end 46 of the copper strip 40 is bent over so as to lie on a protuberance 48 which projects from the inner wall of the base 14 in alignment with the bore 36. The insert 20 carries a needle-like projection 50 with a point 52 on its end which pierces the end part 46 of the copper strip 40.

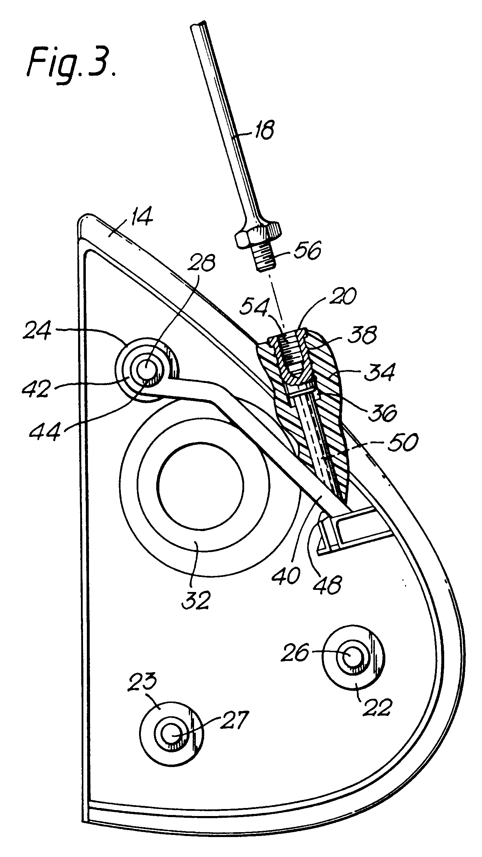

The insert 20 has a central tapped hole 54 (Figure 2) for receiving a screw-threaded formation 56 (Figure 3) on the end of the rod 18. This allows the rod 18 to be removed readily, for example, when the vehicle is to be cleaned in an automatic wash or to avoid the risk of vandalism when the vehicle is left unattended.

Inside the vehicle door 16, the stud 28 carries a metal earthing washer 54 which abuts against the flange 31 and is electrically connected to the sheath conductor 56 of a coaxial aerial cable 58. An insulating washer 60 separates the earthing washer 54 from a terminal washer 62 which is connected to the central conductor of the cable 58. The washers 54, 60 and 62 are held in place by a further washer 64 and nut 66.

The invention accordingly provides a low cost antenna assembly which consists of a small number of parts which can be simply and reliably assembled together.

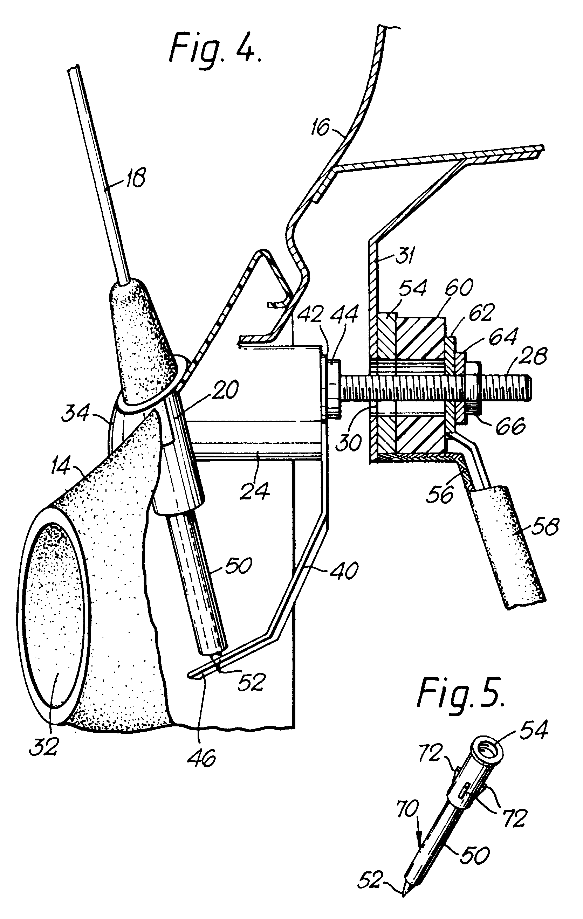

The insert 20 shown in Figures 2 to 4 may be replaced by an insert 70 which, as shown in Figure 5, has barbed formations 72 on its periphery in place of the screw formation 38. The insert 70 is forced-fitted within the bore 36, the barbed formations 72 resisting subsequent removal. The other parts of the insert 70 are the same as the corresponding parts of the insert 20 and are denoted by the same reference numerals.

## Claims

1. An antenna for a vehicle radio in which an antenna assembly is arranged to be mounted on the vehicle body in association with an exterior rear view mirror (10) having a mirror base (14) arranged to be secured to a vehicle body, characterised in that the antenna assembly comprises a rod (18) adapted to be connected to a base insert (20) by a releasable coupling (54, 56), the base insert (20) being fitted into a bore (36) in the mirror base (14) and having a pointed end (52) arranged to pierce an electrical connection strip (40) accommodated within the mirror base (14).

2. An antenna according to claim 1, wherein means for securing the mirror base (14) to a vehicle body includes an electrically conductive stud (28) electrically connected to the connection strip (40) and adapted to project through a hole in the vehicle body, and means (60) for insulating the stud (28) from the vehicle body.

3. An antenna according to claim 1 or 2, wherein the insert (20) has a self-tapping screw thread (38) formed on its periphery for engagement in the bore (36) in the mirror base (14).

4. An antenna according to claim 1 or 2, wherein the insert (70) has barbed formations (72) on its periphery to resist removal from the bore (36) in the mirror base (14).

## Patentansprüche

1. Eine Antenne für ein Autoradio, in der eine Antennenbaugruppe angeordnet ist, um an einer Fahrzeugkarosserie in Verbindung mit einem Außenrückspiegel (10) angeordnet zu werden, der ein Spiegelbasisteil angeordnet hat, um an einer Fahrzeugkarosserie sicher befestigt zu werden,
**dadurch gekennzeichnet,**
daß die Antennenbaugruppe eine Stange (18) umfaßt, die mittels einer lösbaren Kupplung (54, 56) mit einem Basiseinsatz (20) verbunden werden kann, wobei der Basiseinsatz (20) in eine Bohrung (36) im Spiegelbasisteil (14) eingepaßt ist und ein zugespitztes Ende (52) besitzt, das einen in dem Spiegelbasisteil (14) aufgenommenen elektrischen Verbindungsstreifen (40) durchstechen kann.

2. Eine Antenne gemäß Anspruch 1, bei der eine Einrichtung für die sichere Befestigung des Spiegelbasisteils (14) an einer Fahrzeugkarosserie einen elektrisch leitenden Bolzen (28), der elektrisch mit dem Verbindungsstreifen (40) verbunden ist und angepaßt ist, durch ein Loch in der Fahrzeugkarosserie hindurchzuragen, und eine Einrichtung (60) zur Isolierung des Bolzens (28) gegenüber der Fahrzeugkarosserie enthält.

3. Eine Antenne gemäß Anspruch 1 oder 2, bei der der Einsatz (20) auf seiner Außenfläche ein selbstschneidendes Schraubengewinde (38) ausgebildet hat für den Eingriff in die Bohrung (36) im Spiegelbasisteil (14).

4. Eine Antenne gemäß Anspruch 1 oder 2, bei der der Einsatz (70) auf seiner Außenfläche widerhakenartige Gestaltungen (72) besitzt, um einem Wiederentfernen aus der Bohrung (36) im Spiegelbasisteil (14) Widerstand zu leisten.

## Revendications

1. Antenne pour une radio de véhicule, dans laquelle un ensemble formant antenne est agencé pour être monté sur la carrosserie du véhicule, en association avec un rétroviseur extérieur (10) ayant un socle de rétroviseur (14) agencé pour être fixé à une carrosserie de véhicule, caractérisée en ce que l'ensemble formant antenne comprend une tige (18) adaptée pour être connectée à une pièce rapportée de socle (20), par un accouplement libérable (54, 56), la pièce rapportée de socle (20) étant ajustée dans un alésage (36) ménagé dans le socle de rétroviseur (14) et ayant une extrémité pointue (52) agencée pour percer une bande de connexion électrique (40) logée dans le socle de rétroviseur (14).

2. Antenne selon la revendication 1, dans laquelle un moyen pour fixer le socle de rétroviseur (14) à une carrosserie de véhicule comprend un goujon fileté (28) électroconducteur, connecté électriquement à la bande de connexion (40) et adapté pour faire saillie par un trou ménagé dans la carrosserie de véhicule, et un moyen (60) pour isoler le goujon fileté (28) de la carrosserie de véhicule.

3. Antenne selon la revendication 1 ou 2, dans laquelle la pièce rapportée (20) présente un filetage autotaraudant (38) formé sur sa périphérie, en vue de s'engager dans l'alésage (36) ménagé dans le socle de rétroviseur (14).

4. Antenne selon la revendication 1 ou 2, dans laquelle la pièce rapportée (70) présente des ergots (72) formés sur sa périphérie pour s'opposer à une extraction de l'alésage (36) ménagé dans le socle de rétroviseur (14).
